# FASCICULE DE BREVET EUROPEEN

(11) **EP 1 534 459 B1**
(45) Date de publication et mention de la délivrance du brevet: **21.10.2009**
(21) Numéro de dépôt: 03756542.1
(22) Date de dépôt: 12.08.2003
(51) Int. Cl.: B23K 23/00, E01B 11/52

(54) **DISPOSITIF DE REACTION ALUMINOTHERMIQUE**
VORRICHTUNG ZUM ALUMINOTHERMISCHEN SCHWEISSEN
DEVICE FOR ALUMINOTHERMIC REACTION

(30) Priorité: 14.08.2002 FR 0210347
(43) Date de publication de la demande: 01.06.2005
(73) Titulaire: Railtech International, 59590 Raismes (FR)
(72) Inventeur: DELCROIX, Frédéric, F-59171 Hellesmes (FR); THURU, Jean-Jacques, F-59230 Saint-Amand-les-Eaux (FR)
(74) Mandataire: Texier, Christian
(86) Numéro de dépôt international: PCT/FR2003/002512
(87) Numéro de publication internationale: WO 2004/016385

(56) Documents cités:
- EP-A- 0 407 240
- DE-A- 19 822 851
- DE-C- 19 635 173
- US-A- 4 881 677
- US-A- 4 885 452
- US-A- 4 889 324

## Description

La présente invention concerne un dispositif de réaction aluminothermique selon le préambule de la revendication 1. Un tel dispositif est connu du DE 198 22 851 A1.

Un tel dispositif a été aussi proposé par la Demanderesse dans son brevet européen EP 0 407 240 B1 comportant également un creuset de production d'un métal à l'état liquide par réaction aluminothermique et un moule de réception et de confinement de ce métal à l'état liquide dans un espace intermédiaire entre deux pièces métalliques à souder entre elles au moyen de ce métal.

Dans le mode de réalisation décrit dans EP 0 407 240 B1, le bord inférieur du couvercle prend appui sur le bord supérieur du creuset de façon sensiblement continue et sensiblement étanche, et le couvercle est muni de lumières d'évent débouchant dans une dépression centrale d'une paroi supérieure du couvercle et permettant l'échappement, vers l'atmosphère, de fumées dégagées par la réaction aluminothermique tout en piégeant un maximum de particules éventuellement projetées au cours de celle-ci.

Pour permettre l'utilisation du creuset dans certaines conditions dans lesquelles ces fumées pourraient se révéler gênantes, voire dangereuses, par exemple dans un tunnel ou dans un souterrain, EP 0 407 240 B1 propose de déposer sur le couvercle une coiffe filtrante enveloppant au moins les lumières d'évent.

Une telle coiffe filtrante est commercialisée par la Demanderesse sous une conformation légèrement différente de la conformation décrite dans EP 0 407 240 B1, tout en reprenant la conception générale décrite, et son efficacité lorsqu'elle est associée à un couvercle présentant quant à lui la conformation décrite dans EP 0 407 240 B1 est reconnue.

Il est cependant apparu que la technique de filtration des fumées décrite dans EP 0 407 240 B1 pouvait être perfectionnée, ce qui constitue le but de la présente invention.

Telle qu'elle est actuellement fabriquée et commercialisée par la Demanderesse, la coiffe filtrante se présente sous la forme d'une cheminée, tronconique en acier, s'évasant d'un bord inférieur d'appui sensiblement continu et sensiblement étanche sur un rebord périphérique du couvercle du creuset vers un bord supérieur de réception amovible et interchangeable d'un disque de feutre réfractaire faisant office de filtre, entre une grille inférieure d'appui, solidarisée périphériquement avec le bord supérieur de la cheminée, et une grille supérieure de maintien, retenue de façon amovible sur la cheminée par des attaches à ressorts.

Lors de l'utilisation du dispositif de soudure, par ailleurs en tout point conforme au mode de réalisation décrit à titre d'exemple préféré dans EP 0 407 240 B1, on dépose la coiffe filtrante équipée d'un feutre réfractaire neuf sur le rebord du couvercle du creuset alors que ce couvercle est dissocié du creuset, quant à lui déjà posé sur le moule, après quoi on allume la charge aluminothermique dans la chambre du creuset, puis on dépose sur celui-ci l'ensemble ainsi constitué par le couvercle et la coiffe filtrante. Une fois la réaction aluminothermique terminée, on ôte la coiffe filtrante du couvercle puis on libère le moule du creuset et de son couvercle, par destruction de ces derniers lorsqu'ils sont réalisés en vue d'un usage unique comme le décrit EP 0 407 240 B1, avant de détruire le moule lui-même pour dégager la soudure et procéder à sa finition. Ensuite, on change le feutre réfractaire et la coiffe est prête à être réutilisée pour une nouvelle soudure.

Cette possibilité de réutilisation de la coiffe reste cependant limitée dans la mesure où, compte tenu des températures auxquelles elle est soumise pendant la réaction aluminothermique, la cheminée se gondole et, de ce fait, devient progressivement impropre à s'appliquer de façon continue sur le rebord d'un couvercle, si bien qu'elle vient à autoriser vis-à-vis de celui-ci des fuites de fumées non filtrées, et n'assure pas non plus une répétibilité du positionnement du filtre et de sa compression entre les grilles, si bien que la qualité de la filtration se détériore au fur et à mesure des utilisations.

En outre, la coiffe filtrante ainsi utilisée actuellement présente un poids important, de l'ordre de 7 à 8 daN, qui en rend fastidieux le transport de chantier en chantier, risque de provoquer des fissures dans le couvercle lorsque celui-ci est réalisé en sable aggloméré comme il est préféré, si l'on ne procède avec une certaine délicatesse au dépôt de la coiffe sur le couvercle, et fait courir le même risque au creuset lorsqu'on dépose sur celui-ci l'ensemble constitué par la coiffe et le couvercle.

De plus, compte tenu en outre d'un certain encombrement de la coiffe en hauteur, son centre de gravité est placé relativement haut et la position du centre de gravité de l'ensemble constitué par le creuset, son couvercle et la coiffe filtrante se situe particulièrement haut par rapport à l'appui du creuset sur le moule. Cet inconvénient est d'autant plus sensible que le couvercle présente lui-même un certain poids, de l'ordre de 2, 1 daN lorsqu'il est réalisé en sable aggloméré, et un certain encombrement dans le sens de la hauteur et par conséquent un centre de gravité relativement élevé, en raison de la disposition choisie pour les moyens d'évent dans le souci d'éviter dans toute la mesure du possible les projections de particules vers l'extérieur du creuset pendant la réaction aluminothermique. Il en résulte une certaine instabilité d'une part de l'ensemble constitué par le couvercle et sa coiffe filtrante sur le creuset et d'autre part de l'ensemble constitué par le creuset, son chapeau et sa coiffe filtrante sur le moule, lorsque le creuset repose directement sur celui-ci comme le décrit EP 0 407 240 B1, ce qui nécessite de grandes précautions à l'utilisation, par exemple pour la soudure de rails en dévers.

La coiffe filtrante actuellement utilisée présente en outre l'inconvénient de nécessiter la manipulation du filtre usagé et d'un filtre neuf entre deux opérations de soudure, ce qui est désagréable pour les personnels de soudure compte tenu de la nature des matériaux constitutifs des filtres. En outre, on ne peut exclure un oubli de remplacer le filtre entre deux opérations de soudure, c'est-à-dire la réutilisation d'un filtre partiellement colmaté par les poussières véhiculées par les fumées, voire par des particules projetées à travers les évents du couvercle, ce qui entraîne le risque que la pression des gaz dégagés par la réaction aluminothermique soulève la coiffe filtrante, en lui ôtant une bonne part de son efficacité, voire la chasse en créant un danger pour les personnels de soudure.

On retrouverait les mêmes inconvénients si le métal produit par réaction aluminothermique dans la chambre du creuset était destiné à des applications autres qu'une soudure et le but de la présente invention est de remédier au moins à certains de ces inconvénients et, dans ses modes de mise en oeuvre préférés, à l'ensemble de ces inconvénients, indépendamment des applications envisagées.

A cet effet, la présente invention propose une nouvelle conception de couvercle, permettant de se dispenser de toute coiffe filtrante.

Plus précisément, la présente invention propose un dispositif du type indiqué en préambule, caractérisé en ce que le bord périphérique inférieur du couvercle repose sur le bord périphérique supérieur du creuset par l'intermédiaire de la garniture filtrante.

Par le fait que le couvercle, la garniture filtrante, et l'intermédiaire d'appui qu'elle constitue entre le couvercle et le creuset sont sensiblement continus, on entend ici le fait qu'ils n'autorisent pas de fuite significative des fumées vers l'atmosphère sans filtration, c'est-à-dire qu'ils présentent une continuité suffisante pour que la traversée de la garniture filtrante, avec captation des poussières et le cas échéant des particules projetées, constitue au moins à peu près la seule possibilité de passage pour les fumées entre la chambre de réaction du creuset et l'atmosphère.

En particulier, on entend par là :
- le fait que le couvercle selon l'invention est démuni des lumières d'évent décrites dans EP 0 407 240 B1, mais on n'exclut pas qu'il autorise par porosité, en particulier s'il est réalisé en sable aggloméré au moyen d'une résine hydrophobe aux fins d'être aisément destructible après un usage unique, la fuite d'une certaine proportion des fumées, en assurant lui-même leur filtration, ou présente à diverses fins un ou plusieurs trous localisés, n'offrant qu'une faible section au passage direct des fumées, et
- le fait que la garniture filtrante est aussi continue que possible et épouse de façon aussi continue que possible le bord inférieur du couvercle et le bord supérieur du creuset, par exemple en étant réalisée sous forme d'un anneau préfabriqué que l'on vient fixer tel quel au couvercle, sans exclure la possibilité d'une discontinuité n'offrant également qu'une faible section de passage direct des fumées, comme ce peut être le cas d'une mince fente pouvant subsister lorsqu'on réalise la garniture filtrante en tronçonnant une bande de matériau approprié et en enroulant le tronçon ainsi obtenu pour le fermer sur lui-même lors de sa fixation au couvercle.

Ainsi démuni des lumières d'évent du couvercle de l'Art antérieur, tel que décrit dans EP 0 407 240 B1, le couvercle selon l'invention peut être moins haut que ce couvercle de l'Art antérieur et, en l'absence de coiffe filtrante, il présente un centre de gravité beaucoup plus bas que le centre de gravité de l'ensemble constitué par le couvercle de l'Art antérieur et la coiffe filtrante utilisée jusqu'à présent, ce qui améliore considérablement la stabilité du couvercle et de l'ensemble qu'il constitue avec le creuset, de façon particulièrement avantageuse en particulier lorsqu'il s'agit de souder des rails de chemins de fer en dévers. Cet avantage est d'autant plus sensible que le poids du couvercle selon l'invention, du même ordre de grandeur que le poids du couvercle de l'Art antérieur à matériau constitutif identique, est très largement inférieur au poids de l'ensemble constitué par ce couvercle de l'Art antérieur et par la coiffe filtrante utilisée jusqu'à présent ; en effet, si l'on réalise le couvercle en un matériau facilitant sa destruction après utilisation, notamment en sable aggloméré au moyen d'une résine hydrophobe, en vue d'un usage unique, le couvercle conforme à la présente invention peut présenter un poids de l'ordre de 2, 5 daN pour un poids de l'ordre de 9 à 10 daN pour l'ensemble constitué par un couvercle de l'Art antérieur et sa coiffe filtrante.

Cette diminution de poids en comparaison avec l'ensemble constitué par le couvercle de l'Art antérieur et sa coiffe filtrante facilite considérablement les manipulations après que l'on a initié la réaction aluminothermique, puisque seul le couvercle selon l'invention doit alors être déposé sur le creuset, ce qui limite les risques de mise en place défectueuse et de détérioration soit du couvercle, soit du creuset.

Malgré son centre de gravité disposé plus bas que celui du couvercle de l'Art antérieur, le couvercle selon l'invention peut présenter comme ce dernier un poids propre suffisant pour résister, exclusivement par gravité, à toute pression gazeuse susceptible de se développer dans la chambre du creuset lors d'une réaction aluminothermique.

Ce poids beaucoup plus faible que celui de l'ensemble constitué par le couvercle de l'Art antérieur et sa coiffe filtrante rend, de façon générale, les manutentions plus faciles lorsqu'il s'agit de préparer un chantier et, lorsque le couvercle est destiné à un usage unique comme il est préféré, aucune manutention spécifique au couvercle n'est nécessaire après la soudure, le couvercle détruit en même temps que le creuset lorsqu'il est également à usage unique pouvant être jeté sans précaution particulière, c'est-à-dire aussi bien sans risque pour le personnel que sans risque pour l'environnement compte tenu des matériaux généralement utilisés.

Que le couvercle selon l'invention soit réalisé de façon durable, c'est-à-dire réutilisable, ou qu'il soit destiné à un usage unique comme il est préféré, un tel couvercle présente par rapport à la coiffe filtrante utilisée jusqu'à ce jour l'avantage de pratiquer la filtration par un passage des fumées en direction radiale en référence à un axe au moins approximativement vertical, commun au couvercle et au creuset, ce qui limite les risques d'encrassement de la garniture filtrante par des poussières et des particules projetées, qui ont plutôt tendance à monter et à se coller en dessous du couvercle. Incidemment, le couvercle peut jouer lui-même un rôle de filtration à travers sa masse lorsqu'il est poreux, comme c'est le cas lorsqu'il est réalisé en sable aggloméré au moyen d'une résine hydrophobe, sa destination à un usage unique rendant inoffensifs en termes de colmatage les dépôts de poussières et de particules projetées.

On peut favoriser la captation des poussières et des particules projetées par le couvercle en lui donnant la forme générale d'un pot, définissant intérieurement une cavité en retrait vers le haut par rapport à son bord inférieur.

En outre, on peut éviter que des particules projetées, au cours de la réaction aluminothermique viennent colmater localement ou brûler localement la garniture filtrante en créant une chicane entre la chambre de réaction aluminothermique et cette garniture filtrante et, à cet effet, on prévoit, selon un mode de réalisation préféré du couvercle selon l'invention, que celui-ci présente un rebord périphérique continu bordant son bord inférieur à l'intérieur de la garniture filtrante et formant une saillie vers le bas par rapport à celle-ci, ce rebord présentant des dimensions extérieures inférieures aux dites dimensions intérieures du bord supérieur du creuset, délimitant l'ouverture supérieure de la chambre de réaction aluminothermique, de façon à être apte à s'engager avec jeu dans ladite ouverture. Dans ce cas, c'est le matériau constitutif du couvercle proprement dit, par exemple le sable aggloméré au moyen d'une résine hydrophobe, qui reçoit et arrête les projections avant qu'elles ne puissent atteindre la garniture filtrante.

Cependant, on prévoit de préférence que la garniture filtrante présente des dimensions intérieures supérieures auxdites dimensions extérieures du rebord du couvercle, à savoir par exemple identiques aux dites dimensions intérieures du bord supérieur du creuset, de façon à ménager entre le rebord du couvercle et la garniture filtrante un jeu annulaire qui prolonge le jeu subsistant entre le rebord du couvercle et le bord du creuset, autour de l'ouverture de la chambre de réaction, et vers lequel la garniture filtrante offre à la captation des poussières la totalité ou la quasi-totalité de sa dimension circonférentielle et de sa dimension en hauteur.

L'existence d'un tel jeu annulaire entre le rebord du couvercle et la garniture filtrante peut être garantie, lors de la fixation de celle-ci au bord inférieur du couvercle, si l'on prévoit que celui-ci comporte des moyens localisés de centrage de la garniture filtrante par rapport au rebord.

Quelles que soient les variantes de réalisation adoptées pour un couvercle selon l'invention, on observe que sa garniture filtrante travaille dans des conditions bien déterminées, en compression sous l'effet du poids, connu, du couvercle entre le bord inférieur de celui-ci et le bord supérieur du creuset, l'un et l'autre de géométrie bien déterminée. Ainsi, même si la garniture filtrante est compressible, comme il est préféré, et par exemple réalisée en un matériau fibreux choisi dans un groupe comportant les feutres de fibres synthétiques vitreuses, les caractéristiques de filtration qu'elle offre sont bien déterminées.

Lorsque, en outre, le couvercle selon l'invention est destiné à un usage unique, on est ainsi assuré d'une totale répétibilité des caractéristiques de la filtration d'une soudure à l'autre, toute déformation du couvercle au fur et à mesure des soudures étant exclue. De plus, tout risque de pratiquer plusieurs soudures avec une même garniture filtrante est alors exclu, ainsi que les désagréments inhérents à la manipulation des filtres des coiffes filtrantes de l'Art antérieur.

L'efficacité de la filtration n'implique aucune complication dans la géométrie respective du bord supérieur du creuset et du bord inférieur du couvercle, lesquels peuvent être avantageusement sensiblement plans l'un et l'autre, le couvercle pouvant en particulier présenter une forme générale de révolution lorsque tel est le cas du creuset, au moins à proximité immédiate du bord supérieur de celui-ci.

Cependant, on peut augmenter la surface offerte à la captation des poussières par la garniture filtrante en prévoyant que le bord inférieur du couvercle présente des cavités borgnes, localisées circonférentiellement et réparties circonférentiellement, en regard desquelles l'appui dudit bord inférieur sur la garniture filtrante est localement interrompu, et que ces cavités communiquent avec le jeu annulaire subsistant entre le rebord du couvercle et la garniture filtrante selon un mode de réalisation préféré, précité, du couvercle en étant par contre fermées dans le sens d'un éloignement par rapport au rebord du couvercle par l'appui du bord inférieur du couvercle sur la garniture filtrante. Chaque cavité dégage ainsi, entre le bord inférieur du couvercle et la garniture filtrante, une zone supplémentaire de celle-ci en vue de la captation des poussières. Lorsque la garniture filtrante est compressible, l'existence de telles cavités localisées, en dehors desquelles s'effectue l'essentiel de la reprise du poids du couvercle par le creuset à travers la garniture filtrante et au niveau desquelles la garniture filtrante est moins fortement comprimée, permet d'augmenter encore, par un effet d'expansion localisée apparente de la garniture filtrante, la surface offerte par celle-ci à la captation des poussières alors que la perméabilité aux composants gazeux des fumées reste assurée dans des conditions déterminées avec rigueur par la compressibilité de la garniture filtrante, le poids du couvercle et la géométrie de sa face inférieure et en particulier la dimension et le nombre des cavités localisées en question.

On observera qu'un couvercle selon l'invention conserve une conception générale proche de celle d'un couvercle de l'Art antérieur, tel que décrit dans EP 0 407 240 B1, si bien que sa technique de fabrication ne présente pas de difficulté particulière en comparaison avec celle du couvercle de l'Art antérieur et qu'il peut se substituer à un tel couvercle dans un dispositif de soudure aluminothermique par ailleurs conforme à EP 0 407 240 B1 même lorsqu'il s'agit de réaliser des soudures dans des circonstances dans lesquelles, jusqu'à présent, on n'était pas obligé d'utiliser une coiffe filtrante et dans lesquelles, par conséquent, on renonçait à l'utilisation d'une telle coiffe en raison de ses inconvénients précités, ce qui permet d'améliorer en toutes circonstances les conditions de travail et la sécurité du personnel de soudure.

D'autres caractéristiques et avantages d'un couvercle selon l'invention ressortiront de la description ci-dessous, relative à un exemple non limitatif de réalisation, ainsi que des dessins annexés qui accompagnent cette description.

La figure 1 montre une vue, en coupe axiale, d'un creuset de soudure aluminothermique de rails de chemins de fer, équipé d'un couvercle selon l'invention, de façon schématique et en coupe par un plan incluant un axe constituant un axe de symétrie de révolution pour la majeure partie du creuset et du couvercle en position d'utilisation sur celui-ci.

La figure 2 montre, en une vue analogue à celle de la figure 1, le détail du couvercle.

La figure 3 montre une vue de dessous de ce couvercle, dans un sens repéré par une flèche III à la figure 2, de façon limitée aux dispositions jouant un rôle direct dans la filtration.

Il est bien entendu que, même si le couvercle selon l'invention a été illustré et va être décrit dans une application dans laquelle il est associé à un creuset de soudure aluminothermique de rails de chemin de fer, un tel couvercle pourrait être associé à tout creuset de réaction aluminothermique, quelle que soit sa destination, sans que l'on sorte pour autant du cadre de la présente invention. Les adaptations éventuellement nécessaires relèveront des aptitudes normales d'un Homme du métier.

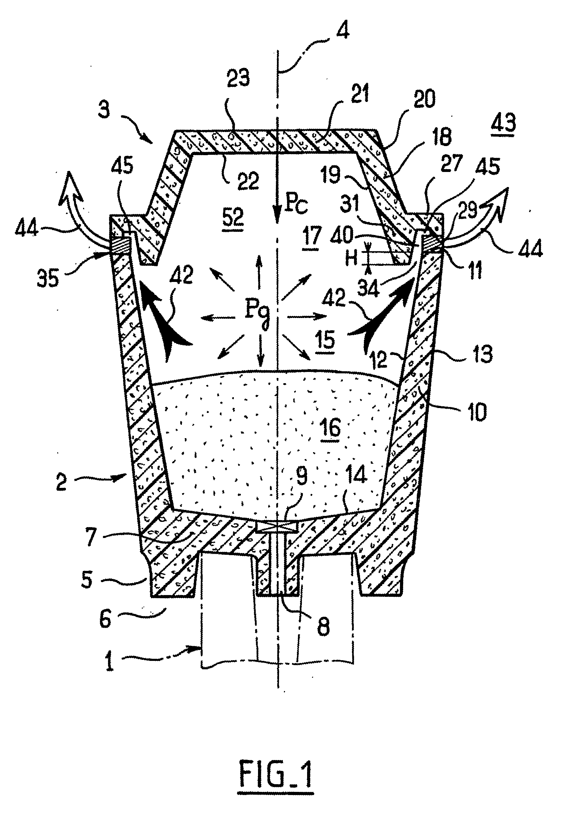

On retrouve à la figure 1, dans ses grandes lignes, le dispositif de soudure aluminothermique décrit dans EP 0 407 240 B1 sous la forme d'un moule 1 à usage unique, délimitant une empreinte non représentée autour d'abouts de deux rails à souder entre eux, également non représentés, d'un creuset 2 de réaction aluminothermique, destiné à la fabrication, par réaction aluminothermique, d'un métal en fusion destiné à remplir l'empreinte du moule en assurant la soudure entre les abouts de rails, ce creuset 2 n'étant soutenu que par emboîtement sur le moule 1 lui-même soutenu par les abouts de rails à souder, et d'un couvercle 3 lui-même soutenu par emboîtement sur le creuset 2. Le moule 1, le creuset 2 et le couvercle 3 présentent un axe moyen commun 4 qui, dans l'exemple illustré, est vertical, mais pourrait également être plus ou moins incliné par rapport à la verticale, en particulier lorsqu'il s'agit de souder les rails d'une voie en dévers, auquel cas l'inclinaison de l'axe 4 par rapport à la verticale peut atteindre plusieurs degrés.

Si l'on excepte une partie inférieure 5 du creuset 2, adaptée à l'emboîtement sur une partie supérieure 6 du moule 1, le creuset 2 présente une forme générale de révolution autour de l'axe 4, en particulier en ce qui concerne une paroi de fond 7, plate, immédiatement adjacente à la partie inférieure 5 et percée axialement d'un trou de coulée 8 fermé avant la réaction aluminothermique et pendant le début de celle-ci par un obturateur thermofusible 9, et une paroi périphérique, tubulaire 10 se raccordant vers le bas à la paroi de fond 7 et s'évasant progressivement vers le haut, à partir de son raccordement à cette paroi de fond 7, jusqu'à un bord supérieur 11 libre, annulaire, plan et perpendiculaire à l'axe 4, raccordant mutuellement une face périphérique intérieure 12 et une face périphérique extérieure 13 de la paroi périphérique 10, l'une et l'autre tronconiques de révolution autour de l'axe 4 et s'évasant vers le haut. La face périphérique intérieure 12 de la paroi périphérique 10 et une face supérieure 14 de la paroi de fond 7 délimitent à l'intérieur du creuset 2 une chambre 15 de réaction aluminothermique, contenant une composition aluminothermique 16 avant la réaction et présentant vers le haut une ouverture supérieure 17 entourée par le bord supérieur 11 dans le sens d'un éloignement par rapport à l'axe 4 et présentant en référence à celui-ci des dimensions intérieures, à savoir un diamètre non référencé, déterminées par le diamètre de la face périphérique intérieure 12 de la paroi périphérique 10 à proximité immédiate de son raccordement au bord supérieur 11.

Cette conception du creuset 2, de même que la conception du moule 1, sont bien connues en elles-mêmes et, en particulier décrites dans EP 0 407 240 B1 auquel on se référera à cet égard. Le creuset 2 et le moule 1 sont de préférence réalisés l'un et l'autre en un matériau se prêtant à une destruction après un usage unique, à savoir en sable aggloméré, lié par une résine hydrophobe telle que de la bakélite en vue d'un usage unique ; cependant, on ne sortirait pas du cadre de la présente invention en utilisant un creuset et/ou un moule durables, c'est-à-dire utilisables pour plusieurs soudures, le mode de réalisation pratique du creuset 2 et du moule 1 étant indifférent au regard de la présente invention.

Par contre, tout en présentant des dispositions communes au couvercle décrit dans EP 0 407 240 B1, le couvercle 3 présente des dispositions caractéristiques de la présente invention, lesquelles vont être décrites à présent en référence à la position dans laquelle le couvercle a été illustré, c'est-à-dire la position qu'il occupe lors de son utilisation, à l'état emboîté sur le creuset 2 lui-même emboîté sur le moule 1 en vue d'assurer une soudure.

Dans cette position, le couvercle 3 ferme la chambre 15 de réaction aluminothermique vers le haut, en délimitant avec elle un volume suffisant pour autoriser le développement gazeux accompagnant la réaction aluminothermique tout en résistant du fait de son seul poids P_{c} à la pression Pg des gaz se développant ainsi dans ce volume, d'une part, et tout en autorisant la sortie de ces gaz en assurant par filtration la retenue des poussières qu'ils entraînent et par captation directe la retenue des particules éventuellement projetées lors de la réaction aluminothermique.

A cet effet, contrairement au couvercle décrit dans EP 0 407 240 B1, le couvercle 3 est sensiblement continu, c'est-à-dire démuni de lumières d'évent, et il n'est pas nécessaire de lui associer une coiffe filtrante dans la mesure où, conformément à la présente invention, la séparation entre les gaz et les poussières constituant les fumées produites par la réaction aluminothermique a lieu au moyen d'une filtration au niveau de l'appui du couvercle 3 sur le bord supérieur 11 de la paroi périphérique 10 du creuset 2, et ceci exclusivement si l'on excepte un effet de filtration à travers le couvercle 3 lui-même lorsque celui-ci est réalisé en un matériau poreux comme c'est le cas lorsque, dans le but de le rendre aisément destructible après un usage unique, on le réalise en sable aggloméré au moyen d'une résine hydrophobe telle que de la bakélite, un effet similaire pouvant être observé à travers le creuset 2 lorsque celui-ci est également ainsi réalisé.

Plus précisément, le couvercle 3 présente la forme générale d'un pot qui, comme la paroi périphérique 10 du creuset 2 dans l'exemple illustré, est pour l'essentiel symétrique de révolution autour de l'axe 4.

Cette forme est définie en particulier par une paroi périphérique 18 tubulaire, délimitée respectivement vers l'axe 4 et dans le sens d'un éloignement par rapport à celui-ci par des faces périphériques respectivement intérieure 19 et extérieure 20 l'une et l'autre tronconiques de révolution autour de l'axe 5 et convergeant vers le haut en formant un même angle non référencé avec cet axe 5, et par une paroi de fond 21 plate, délimitée respectivement vers le bas et vers le haut, c'est-à-dire respectivement vers l'intérieur du creuset 2 et vers l'extérieur de celui-ci, par une face plane et perpendiculaire à l'axe 4, à savoir respectivement par une face intérieure 22 et une face extérieure 23. Ainsi, le couvercle 3 délimite une cavité 52 ouverte vers le bas et communiquant librement avec la chambre 15 de réaction aluminothermique pour définir avec celle-ci le volume fermé précité, dans lequel peuvent s'expanser les fumées dégagées lors de la réaction aluminothermique.

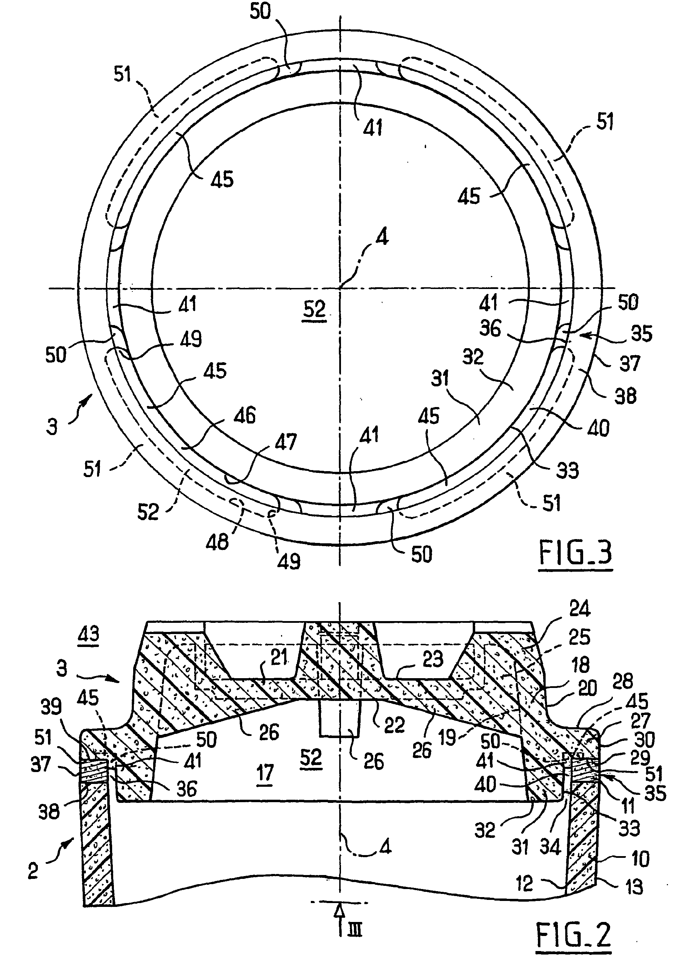

Dans le sens d'un éloignement par rapport à l'axe 4, comme le montre schématiquement la figure 1, les faces 22 et 23 pourraient se raccorder directement respectivement à la face périphérique intérieure 19 et à la face périphérique extérieure 20 de la paroi 18 mais, de préférence et comme il est illustré à la figure 2, la face intérieure 22 se raccorde à la face périphérique intérieure 19 par une gorge périphérique 25, annulaire de révolution autour de l'axe 2, alors que la face extérieure 23 se raccorde à la face périphérique extérieure 20 par un bossage annulaire 24 en saillie vers le haut, logeant la gorge 25.

En outre, en particulier pour des raisons de résistance mécanique du couvercle 3, des nervures rectilignes 26, radiales en référence à l'axe 4 et régulièrement réparties angulairement autour de celui-ci, à savoir par exemple quatre de ces nervures, peuvent être prévues en relief sur la face intérieure 22 de la paroi de fond 21 et sur la paroi périphérique intérieure 19 de la paroi 18, à travers la gorge 25.

Ces nervures 26 présentant l'avantage, au même titre que la gorge 25, d'augmenter ainsi la surface de contact du couvercle 3 avec les fumées dégagées lors de la réaction aluminothermique à l'intérieur de la chambre 15 et d'augmenter ainsi la capacité des faces intérieures 19 et 22 à capter les poussières et les particules projetées.

Vers le bas, c'est-à-dire à l'opposé de son raccordement avec la paroi de fond 21, la paroi périphérique extérieure 18 se raccorde à un rebord annulaire 27 du couvercle 3, lequel rebord 27 présente une forme de révolution autour de l'axe 4 et forme une saillie, dans le sens d'un éloignement par rapport à celui-ci, sur la paroi périphérique 18.

Plus précisément, le rebord 27 est délimité respectivement vers le haut et vers le bas par une face annulaire plane, de révolution autour de l'axe 4 auquel elle est perpendiculaire, à savoir respectivement une face supérieure 28 qui se raccorde directement à la face périphérique extérieure 20 de la paroi périphérique 18 dans le sens d'un rapprochement par rapport à l'axe 4 et une face inférieure 29 qui se raccorde indirectement à la face périphérique intérieure 19 de la paroi périphérique 18 dans ce sens, comme il apparaîtra par la suite. Dans le sens d'un éloignement par rapport à l'axe 4, les faces 28 et 29 sont raccordées mutuellement par un chant 30 approximativement cylindrique de révolution autour de l'axe 4 et tourné dans le sens d'un éloignement par rapport à celui-ci, ce chant 30 présentant toutefois une légère conicité de façon à converger vers le haut comme la face périphérique extérieure 20 de la paroi périphérique 18, en raison d'une fabrication du couvercle 3 par moulage lorsque, comme il est préféré, ce couvercle 3 est réalisé en sable aggloméré au moyen d'une résine hydrophobe.

Au niveau de son raccordement avec la face inférieure 20, le chant 30 présente en référence à l'axe 4 un diamètre qui est sensiblement identique à celui du raccordement de la face périphérique extérieure 13 de la paroi périphérique 10 du creuset 2 avec le bord supérieur 11 de cette paroi 10, ce qui définit également le diamètre maximal de la face inférieure 29. Celle-ci présente par ailleurs un diamètre minimal, défini ultérieurement, qui est inférieur au diamètre de la face périphérique intérieure 12 que la paroi périphérique 10 présente à son raccordement avec le bord supérieur 11 de cette paroi 10, c'est-à-dire au diamètre de l'ouverture 17, les valeurs de ces deux diamètres restant toutefois voisines et ne différant que de quelques millimètres dans le cas d'un creuset 2 et d'un couvercle 3 destinés à être associés dans le cadre d'un dispositif de soudure aluminothermique de rails.

Dans ces conditions, le couvercle 3 en position d'utilisation repose sur le bord supérieur 11 de la paroi périphérique 10 du creuset 2 par la face inférieure 29 de son rebord 27, d'une façon indirecte comme il ressortira de la suite de la description.

Alors que la face périphérique extérieure 20 de la paroi périphérique 18 du couvercle 3 s'arrête, vers le bas, à son raccordement avec la face supérieure 28 du rebord 27, la face périphérique intérieure 19 de cette paroi périphérique 18 se prolonge jusqu'à un niveau inférieur à celui de la face inférieure 29 du rebord 27 en délimitant vers l'axe 4 un rebord 31 annulaire de révolution autour de l'axe 4, continu, placé en sailli vers le bas par rapport à la face inférieure 29 du rebord 27 et assurant le raccordement indirect précité de cette face inférieure 29 à la face périphérique intérieure 19 de la face périphérique 18.

Ce rebord 31 est délimité vers le bas par une face inférieure 32 annulaire de révolution autour de l'axe 4, plane et perpendiculaire à cet axe 4, laquelle face 32 raccorde, dans le sens d'un éloignement par rapport à cet axe 4, le prolongement de la face périphérique intérieure 19 de la paroi 18 à une face périphérique extérieure 33 du rebord 31, laquelle est tronconique de révolution autour de l'axe 4 en convergeant vers le bas pour les raisons précitées de réalisation du couvercle 3 par moulage, et se raccorde vers le haut à la face inférieure 29 du rebord 27 par le diamètre minimal de cette face 29.

Dans ces conditions, comme le montrent les figures 1 et 2, le rebord 31 s'emboîte dans l'ouverture 17 de la chambre 15 du creuset 2 lorsque le couvercle 3 repose sur le bord supérieur 11 de la paroi périphérique 10 par la face inférieure 29 du rebord 27, mais il laisse subsister entre sa face périphérique extérieure 33 et la face périphérique intérieure 12 de la paroi périphérique 10 du creuset 2 un jeu 34 annulaire de révolution autour de l'axe 4 et continu en direction circonférentielle autour de cet axe 4, si le couvercle 3 est parfaitement centré par rapport au creuset 2, ou discontinu seulement de façon très localisée par contact mutuel des faces 33 et 12 en cas de défaut maximal de coaxialité entre le couvercle 3 et le creuset 2.

Ce jeu 34 autorise le passage des gaz produits par la réaction aluminothermique et des poussières qui n'auraient pas été captées par les faces intérieures 22 et 19 du couvercle 3, vers l'appui mutuel de la face inférieure 29 du rebord 27 du couvercle 3 et du bord supérieur 11 de la paroi périphérique 10 du creuset 2, mais le rebord 31 constitue entre la chambre 15 et cet appui mutuel une chicane empêchant dans la plus grande mesure un passage des particules projetées vers cet appui.

Afin d'assurer une filtration des gaz encore chargés de poussières parvenant à l'appui de la face 29 sur la face 11, comme on l'a indiqué précédemment, cet appui n'est pas direct, mais s'effectue conformément à la présente invention par l'intermédiaire d'une garniture filtrante 35 annulaire de révolution autour de l'axe 4, sensiblement continue et servant ainsi d'intermédiaire sensiblement continu d'appui à la face inférieure 29 du rebord 27, ou bord inférieur du couvercle 3, sur le bord supérieur 11 de la paroi périphérique 10 du creuset 2.

Cette garniture filtrante 35 est avantageusement réalisée en un matériau compressible, à savoir de préférence un matériau fibreux choisi dans un groupe comportant les feutres de fibres synthétiques vitreuses, et l'on a obtenu de bons résultats aux essais en utilisant un produit du type diffusé sous sa marque par la Société Unifrax Corporation et ses filiales, constitué de fibres synthétiques vitreuses, amorphes et inertes, contenant du magnésium sous forme de 19 à 26% de MgO et de la silice sous forme de 72 à 77% de SiO₂, liées par un latex acrylique en proportion inférieure à 12%, mais cette indication n'est donnée qu'à titre d'exemple non limitatif, d'autres constituants pouvant être choisis pour la garniture filtrante 35 sans que l'on sorte pour autant du cadre de la présente invention.

Elle peut être réalisée sous la forme d'un anneau préfabriqué dans un tel matériau, ou encore sous la forme d'une bande d'un tel matériau, que l'on tronçonne à longueur convenable et que l'on enroule de façon à la fermer sur elle-même sous forme d'un anneau, ces exemples n'étant en aucune façon limitatifs.

Lorsqu'elle est vue en coupe par un quelconque demi-plan limité par l'axe 4, la garniture filtrante 35 présente de préférence une section rectangulaire, comme il est illustré, délimitée respectivement dans le sens d'un rapprochement par rapport à l'axe 4 et dans le sens d'un éloignement par rapport à celui-ci par des faces périphériques respectivement intérieure 36 et extérieure 37, cylindriques de révolution autour de l'axe 4 avec un diamètre qui correspond respectivement au diamètre que la face périphérique intérieure 12 de la paroi périphérique 10 du creuset 2 présente à son raccordement avec le bord supérieur 11 et au diamètre que la face périphérique extérieure 13 de cette paroi périphérique 10 présente à son raccordement avec ce même bord supérieur 11. Respectivement vers le bas et vers le haut, cette section rectangulaire de la garniture filtrante 35 est définie par une face inférieure 38 et par une face supérieure 39 l'une l'autre planes, annulaires de révolution autour de l'axe 4 auquel elles sont perpendiculaires, lesquelles faces 38 et 39 raccordent mutuellement les faces 36 et 37 respectivement vers le haut et vers le bas.

La garniture filtrante 35 est fixée au rebord 27 par exemple par collage de sa face supérieure 39 à la face inférieure 29 du rebord 27, dans des conditions telles que sa face périphérique extérieure 37 prolonge vers le bas le chant 30 du rebord 27 et que sa face périphérique intérieure 36 laisse subsister vis-à-vis de la face périphérique extérieure 33 du rebord 31 un jeu 40 annulaire de révolution autour de l'axe 4 et continu aussi bien circonférentiellement en référence à cet axe que parallèlement à celui-ci. La préservation de ce jeu 40, c'est-à-dire la coaxialité de la face périphérique intérieure 36 de la garniture filtrante 35 vis-à-vis de la face périphérique extérieure 33 du rebord 31 du couvercle 3 peut être assurée, lors de la fixation de la garniture 35 par sa face 39 à la face 29 du rebord 27, par des pions de centrage 41 mutuellement identiques, régulièrement répartis angulairement autour de l'axe 4 et par exemple prévus au nombre de quatre disposés suivant deux diamètres orthogonaux, que le couvercle 3 présente en saillie localisée par rapport à la face inférieure 29 du rebord 27 et par rapport à la face périphérique extérieure 33 du rebord 31, dans le sens d'un éloignement par rapport à l'axe 4, chacun de ces pions 41 présentant parallèlement à l'axe 4 une dimension sensiblement inférieure à la dimension qui sépare mutuellement les faces 38 et 39 de la garniture 35 parallèlement à cet axe et circonférentiellement en référence à l'axe 4 une dimension faible par rapport à celle de la face 36 de la garniture 35.

Ainsi, lorsqu'on pose le couvercle 3 par l'intermédiaire de la garniture 35, c'est-à-dire par la face inférieure 38 de celle-ci, sur le bord supérieur 11 de la paroi périphérique 10 du creuset 2, le jeu 40 vient se placer avec plus ou moins de précision dans le prolongement du jeu 34 vers le haut, si bien que l'intégralité de la face 36 de la garniture 35, si l'on excepte les emplacements très localisés des pions 41, est exposée aux gaz et aux poussières remontant par le jeu 34 depuis la chambre 15, comme on l'a schématisé par des flèches 42 à la figure 1, et oppose une retenue aux poussières charriées par les gaz en offrant à ces derniers la possibilité de sortir vers l'air ambiant 43 sous forme dépoussiérée, comme on l'a schématisé par des flèches 44 à la figure 1.

Naturellement, l'aptitude de la garniture filtrante 35 à laisser passer les gaz tout en retenant les poussières est fonction de sa densité, de ses dimensions et de la compression à laquelle elle est soumise par le couvercle 3, du fait de son poids. A titre d'exemple non limitatif, pour un chapeau 3 d'un poids de l'ordre de 2, 5 daN, on a obtenu de bons résultats aux essais en utilisant comme garniture filtrante 35 un feutre du type identifié précédemment avec une densité de 185 daN par m³ pour une épaisseur de 12mm, mesurée entre les faces 38 et 39 en l'absence de compression de la garniture 35, et pour une largeur de celle-ci de 30mm, mesurée entre les faces 36 et 37 en l'absence de compression de la garniture 35 et correspondant à la différence de diamètre entre les faces périphériques intérieure 12 et extérieure 13 de la paroi périphérique 10 du creuset 2 à leur raccordement avec le bord supérieur 11 de cette paroi 10. Il s'agit toutefois d'un exemple non limitatif, et d'autres valeurs pourraient être choisies, notamment en association avec des matériaux autres que le matériau identifié ci-dessus, sans que l'on sorte pour autant du cadre de la présente invention.

Dans tous les cas, la distance séparant mutuellement les faces 38 et 39 est telle qu'aussi bien avant compression de la garniture filtrante 35 entre la face inférieure 29 du rebord 27 du couvercle 3 et le bord supérieur 11 de la paroi périphérique 10 du creuset 2 qu'après compression entre cette face 29 et ce bord 11 sous l'effet du poids du couvercle 3, le rebord 31 forme, par sa face inférieure 32, une saillie par rapport à la face inférieure 38 de la garniture filtrante 35, comme on l'a schématisé en H à la figure 1, de façon à autoriser l'effet d'emboîtement mutuel précité du couvercle 3, par son rebord 31, à l'intérieur de l'ouverture 17 de la chambre 15 du creuset 2.

On observera que, à moins d'un désaxement maximal du couvercle 3 par rapport au creuset 2, imposant un contact direct mais très localisé entre la face périphérique extérieure 33 du rebord 31 du couvercle 3 et la face périphérique intérieure de la paroi périphérique 10 du creuset 2, le contact du couvercle 3 avec le creuset 2 s'effectue exclusivement par l'intermédiaire de la garniture filtrante 35 si bien que, lorsque le couvercle 3 et le creuset 2 sont réalisés en sable aggloméré au moyen d'une résine hydrophobe, tout contact sable-sable est évité, et tout risque de détérioration du creuset 2 ou du couvercle 3 et de chute de sable de l'un ou l'autre à l'intérieur de la chambre 15 à la suite d'un tel contact sable-sable est exclu.

De préférence, afin de permettre de continuer à utiliser les creusets 2 de l'Art antérieur conjointement avec un couvercle 3 selon l'invention, on ne modifie en rien le bord supérieur 11 de la paroi périphérique 10 de ce creuset 2, en comparaison avec les dispositions décrites dans EP 0 407 240 B1, si bien que l'appui de la face inférieure 38 de la garniture filtrante 35 sur ce bord supérieur 11 est un appui à plat.

On pourrait également se contenter d'un tel appui à plat entre la face supérieure 39 de la garniture 35 et la face inférieure 29 du rebord 27, mais on préfère conformer la face inférieure 29 de façon à dissocier des zones localisées, privilégiées, d'appui sur le bord supérieur 11 de la paroi périphérique 10 du creuset 2 par l'intermédiaire de la garniture filtrante 35, ainsi soumise à un surcroît de compression dans ces zones localisées, et des zones localisées, plus largement dimensionnées, dans lesquelles cet appui s'effectue dans une moindre mesure et dans lesquelles, par conséquent, la garniture filtrante 35 est moins comprimée pour offrir à l'intérieur de la chambre 15, par sa face périphérique intérieure 36, une surface maximale de captation des poussières tout en offrant une perméabilité accrue au passage des gaz.

Ainsi, dans l'exemple illustré, la face inférieure 29 du rebord 27 est creusée localement, de façon régulièrement répartie angulairement autour de l'axe 4, à savoir en pratique entre les pions 41, de cavités arquées 45, ainsi prévues en autant d'exemplaires que de pions 41, c'est-à-dire ici en quatre exemplaires, et présentant chacune un développement angulaire aussi grand que possible entre ces pions 41, en référence à l'axe 4.

Chacune de ces cavités 45 est délimitée par un fond plan 46 perpendiculaire à l'axe 4, c'est-à-dire parallèle à la face inférieure 29 du rebord 27 en étant placé en retrait vers la face 28 par rapport à cette face 29, à laquelle le fond 46 se raccorde :
- radialement au plus près de l'axe 4, par un flanc 47 tronconique de révolution autour de cet axe 4 et en pratique constitué par un prolongement localisé de la face périphérique extérieure 33 du rebord 31 jusqu'au fond 46,
- radialement au plus loin de l'axe 4 par un flanc 48 également tronconique de révolution autour de l'axe 4 mais de conicité inverse de celle du flanc 47, avec un diamètre intermédiaire entre les diamètres respectifs des faces périphériques 36 et 37 de la garniture filtrante 35 au raccordement de ce flanc 48 avec la face inférieure 29 du rebord 27, et
- respectivement dans l'un et l'autre sens circonférentiels en référence à l'axe 4, par des flancs concaves 49, par exemple hémitronconiques autour d'un axe respectif parallèle à l'axe 4 et s'évasant dans un sens allant du fond 46 vers la face inférieure 29 du rebord 27.

Ainsi, entre deux flancs 49 voisins, délimitant deux cavités 45 voisines, subsiste autour d'un pion de centrage 41 respectivement correspondant, en direction circonférentielle, une zone localisée 50 de la face inférieure 29 du rebord 27, laquelle zone localisée 50 est placée en saillie par rapport au fond 46 des cavités et constitue ainsi une zone d'appui du couvercle 3 sur le creuset 2 par l'intermédiaire de la garniture filtrante 35, c'est-à-dire une zone localisée de compression directe de cette garniture filtrante 35 entre la face inférieure 29 du rebord 27 et la face supérieure 11 du creuset 2, sous le poids du couvercle 3, alors que, en regard de chaque cavité 45, cette garniture 35 est moins comprimée, voire non comprimée, et offre à la captation des poussières et au passage des gaz non seulement sa face périphérique intérieure 36, mais également une partie de sa face supérieure 39, placée en regard de la cavité 45 correspondante.

Les zones 50 sont raccordées mutuellement, en direction circonférentielle, par d'autres zones 51 de la face inférieure 29 du rebord 27, lesquelles zones 51 longent les cavités 45 par leur flanc 48, c'est-à-dire dans le sens d'un éloignement par rapport à l'axe 4, de telle sorte que les zones 50 et 51 se complètent sans discontinuité le long d'une zone marginale, circonférentiellement continue, de la face inférieure 29 du rebord 27 du couvercle 3, bordant le raccordement de cette face inférieure 29 avec le chant 30 de ce rebord 27, pour répartir également à ce niveau l'appui du couvercle 3 sur le creuset 2 par l'intermédiaire de la garniture filtrante 35 et limiter ainsi la compression de celle-ci au niveau des zones 50, tout en fermant les cavités 45 dans le sens d'un éloignement par rapport à l'axe 4 et en obligeant ainsi les gaz à traverser la garniture filtrante 35 pour sortir de la chambre 15.

La profondeur des cavités 45, mesurée entre leur fond 46 et les zones 50 et 51 de la face inférieure 29 du rebord 27, est choisie suffisante pour éviter entre la face 39 de la garniture 35 et leur fond 46 un contact qui nuirait à la possibilité d'obtenir une captation des poussières également par une partie de la face 39, c'est-à-dire pour assurer la subsistance, entre le fond 46 de chaque cavité 45 et la face 39 de la garniture filtrante 35, d'un jeu 52 communiquant avec le jeu 40 communiquant lui-même avec le jeu 34 lorsque le couvercle 3 est déposé sur le creuset 2 par l'intermédiaire de la garniture filtrante 35. A cet égard, une profondeur de l'ordre de quelques millimètres est suffisante dans l'exemple précédemment chiffré.

Il est bien entendu cependant que, en variante ou en complément, on pourrait prévoir au niveau des bord supérieur 11 de la paroi périphérique 10 du creuset 2 des dispositions similaires à celles du rebord 27 dans les but d'augmenter la surface de captation des poussières par la garniture 35, en l'espèce en autorisant une captation des poussières par une partie de la face inférieure 38 de la garniture 35.

De façon générale, un Homme du métier comprendra aisément que les dispositions qui viennent d'être décrites, en relation avec une application du couvercle selon l'invention 3 en association avec un creuset 2 de soudure aluminothermique de rails de chemin de fer, pourraient connaître de nombreuses variantes, notamment en vue d'autres applications, sans que l'on sorte pour autant du cadre de la présente invention tel qu'il est défini par les revendications annexées.

## Revendications

1. Dispositif de réaction aluminothermique, comprenant un creuset (2) définissant une chambre (15) de réaction aluminothermique et un couvercle (3) destiné à fermer une ouverture supérieure (17), de dimensions intérieures déterminées, de ladite chambre (15), ledit couvercle (3) comportant à cet effet un bord périphérique inférieur (29) apte à prendre appui sur un bord périphérique supérieur (11) du creuset délimitant ladite ouverture supérieure (17), ledit couvercle étant sensiblement continu et portant solidairement, par ledit bord inférieur (29), une garniture filtrante (35), annulaire, sensiblement continue, apte à constituer un intermédiaire sensiblement continu d'appui dudit bord inférieur (29) sur ledit bord supérieur (11), **caractérisé en ce que** le bord périphérique inférieur (29) du couvercle (3) repose sur le bord périphérique supérieur (11) du creuset par l'intermédiaire de la garniture filtrante (35).

2. Dispositif selon la revendication 1, **caractérisé en ce que** ladite garniture filtrante (35) est compressible.

3. Dispositif selon la revendication 2, **caractérisé en ce que** ladite garniture filtrante (35) est en un matériau fibreux choisi dans un groupe comportant les feutres de fibres synthétique vitreuses.

4. Dispositif selon l'une quelconque des revendications 1 à 3, ledit bord supérieur (11) du creuset (2) étant sensiblement plan, **caractérisé en ce que** ledit bord inférieur (29) du couvercle (3) est sensiblement plan.

5. Dispositif selon l'une quelconque des revendications 1 à 4, **caractérisé en ce que** le couvercle (3) présente un rebord périphérique continu (31) bordant ledit bord inférieur (29) à l'intérieur de ladite garniture filtrante (35) et formant une saillie vers le bas par rapport à celle-ci, ledit rebord (31) présentant des dimensions extérieures inférieures aux dites dimensions intérieures de façon à être apte à s'engager avec jeu (34) dans ladite ouverture (17).

6. Dispositif selon la revendication 5, **caractérisé en ce que** la garniture filtrante (35) présente des dimensions intérieures supérieures auxdites dimensions extérieures de façon à ménager un jeu annulaire (40) entre ledit rebord (31) et la garniture filtrante (35).

7. Dispositif selon la revendication 6, **caractérisé en ce que** le couvercle (3) présente des moyens localisés (41) de centrage de la garniture filtrante (35) par rapport audit rebord (31), pour assurer l'existence dudit jeu annulaire (40).

8. Dispositif selon l'une quelconque des revendications 6 et 7 dans leur relation de dépendance vis-à-vis de la revendication 4, **caractérisé en ce que** ledit bord inférieur (29) présente des cavités borgnes (45), localisées circonférentiellement et réparties circonférentiellement, en regard desquelles l'appui dudit bord inférieur (29) sur ladite garniture filtrante (35) est localement interrompu, et **en ce que** lesdites cavités (45) communiquent avec ledit jeu annulaire (40), mais sont fermées, dans le sens d'un éloignement par rapport audit rebord (31), par l'appui du bord inférieur (29) du couvercle (3) sur la garniture filtrante (35).

9. Dispositif selon l'une quelconque des revendications 1 à 8, **caractérisé en ce que** le couvercle (3) présente la forme générale d'un pot, définissant intérieurement une cavité (52) en retrait vers le haut par rapport audit bord inférieur (29).

10. Dispositif selon l'une quelconque des revendications 1 à 10, **caractérisé en ce que** le couvercle (3) présente une forme générale de révolution.

11. Dispositif selon l'une quelconque des revendications 1 à 11, **caractérisé en ce que** le couvercle (3) est à usage unique, réalisé en un matériau facilitant sa destruction après utilisation, en particulier en sable aggloméré au moyen d'un liant.

## Claims

1. An aluminothermic reaction device, comprising a crucible (2) defining an aluminothermic reaction chamber (15) and a lid (3) intended to close an upper aperture (17), of determined inner dimensions, of said chamber (15), said lid (3) including for this purpose a lower peripheral edge (29) capable of being supported on an upper peripheral edge (11) of the crucible delimiting said upper aperture (17), said lid being substantially continuous and bearing interdependently through said lower edge (29), a substantially continuous, ring-shaped, filter lining (35) capable of forming a substantially continuous intermediate for supporting said lower edge (29) on said upper edge (11), **characterized in that** the lower peripheral edge (29) of the lid (3) rests on the upper peripheral edge (11) of the crucible via the filter lining (35).

2. The device according to claim 1, **characterized in that** said filter lining (35) is compressible.

3. The device according to claim 2, **characterized in that** said filter lining (35) is a fibrous material selected from a group including felts of glassy synthetic fibers.

4. The device according to any of claims 1 to 3, said upper edge (11) of the crucible (2) being substantially planar, **characterized in that** said lower edge (29) of the lid (3) is substantially planar.

5. The device according to any of claims 1 to 4, **characterized in that** the lid (3) has a continuous peripheral rim (31) bordering said lower edge (29) inside said filter lining (35) and forming a protrusion downwards relatively to the latter, said rim (31) having outer dimensions less than said inner dimensions, so as to be able to engage with clearance (34) into said aperture (17).

6. The device according to claim 5, **characterized in that** the filter lining (35) has inner dimensions larger than said outer dimensions so as to provide annular clearance (40) between said rim (31) and the filter lining (35).

7. The device according to claim 6, **characterized in that** the lid (3) has localized means (41) for centering the filter lining (35) relatively to said rim (31), in order to ensure the existence of said annular clearance (40).

8. The device according to any of claims 6 and 7 in their dependency relationship with respect to claim 4, **characterized in that** said lower edge (29) has blind cavities (45) localized circumferentially and distributed circumferentially, facing which the support of said lower edge (29) on said filter lining (35) is locally interrupted, and **in that** said cavities (45) communicate with said annular clearance (40), but are closed in the direction away from said rim (31), by the support of the lower edge (29) of the lid (3) on the filter lining (35).

9. The device according to any of claims 1 to 8, **characterized in that** the lid (3) has the general shape of a pot, inwardly defining a cavity (52) set back upwards relatively to said lower edge (29).

10. The device according to any of claims 1 to 10, **characterized in that** the lid (3) has a general axisymmetrical shape.

11. The device according to any of claims 1 to 11, **characterized in that** the lid (3) is for single use, made in a material facilitating its destruction after use, in particular in sand agglomerated by means of a binder.

## Patentansprüche

1. Vorrichtung für eine aluminothermische Reaktion, umfassend einen Tiegel (2), der eine Kammer (15) für eine aluminothermische Reaktion abgrenzt, und einen Deckel (3), dazu bestimmt ist, eine obere Öffnung (17), mit bestimmten Innenabmessungen, der Kammer (15) zu schließen, wobei der Deckel (3) zu diesem Zwecke einen unteren umlaufenden Rand (29) aufweist, der dazu befähigt ist, auf dem oberen umlaufenden Rand (11) des Tiegels, welcher die obere Öffnung (17) begrenzt, aufzuliegen, wobei der Deckel im Wesentlichen durchgehend ist und an seinem unteren Rand (29) mit einer fest anhaftenden, ringförmigen Einlage mit Filterwirkung (35) versehen ist, die im Wesentlichen durchgehend ist und dazu befähigt ist, ein im Wesentlichen durchgehendes Zwischenstück darzustellen, mittels dessen der untere Rand (29) auf dem oberen Rand (11) aufliegt, **dadurch gekennzeichnet, dass** der untere umlaufende Rand (29) des Deckels (3) über die Einlage mit Filterwirkung (35) auf dem oberen umlaufenden Rand (11) des Tiegels ruht.

2. Vorrichtung nach Anspruch 1, **dadurch gekennzeichnet, dass** die Einlage mit Filterwirkung (35) komprimierbar ist.

3. Vorrichtung nach Anspruch 2, **dadurch gekennzeichnet, dass** die Einlage mit Filterwirkung (35) aus einem faserigen Werkstoff besteht, der aus der Gruppe gewählt ist, die Filzstoffe aus glasartigen Kunstfasern aufweist.

4. Vorrichtung nach einem beliebigen der Ansprüche 1 bis 3, wobei der obere Rand (11) des Tiegels (2) im Wesentlichen eben ist, **dadurch gekennzeichnet, dass** der untere Rand (29) des Deckels (3) im Wesentlichen eben ist.

5. Vorrichtung nach einem beliebigen der Ansprüche 1 bis 4, **dadurch gekennzeichnet, dass** der Deckel (3) eine durchgehende umlaufende Kante (31) aufweist, die den unteren Rand (29) innenseitig der Einlage mit Filterwirkung (35) säumt und gegenüber dieser einen nach unten gerichteten Vorsprung bildet, wobei die Kante (31) Außenabmessungen aufweist, welche geringer als die genannten Innenabmessungen sind, sodass sie dazu befähigt ist, in die Öffnung (17) einzudringen, wobei ein Spielraum (34) verbleibt.

6. Vorrichtung nach Anspruch 5, **dadurch gekennzeichnet, dass** die Einlage mit Filterwirkung (35) Innenabmessungen aufweist, die größer als die genannten Außenabmessungen sind, sodass zwischen der Kante (31) und der Einlage mit Filterwirkung (35) ein ringförmiger Spielraum (40) ausgespart bleibt.

7. Vorrichtung nach Anspruch 6, **dadurch gekennzeichnet, dass** der Deckel (3) an bestimmten Stellen Mittel (41) zum Zentrieren der Einlage mit Filterwirkung (35) gegenüber der Kante (31) aufweist, um das Vorhandensein des ringförmigen Spielraums (40) sicherzustellen.

8. Vorrichtung nach einem beliebigen der Ansprüche 6 und 7, sofern diese von Anspruch 4 abhängig sind, **dadurch gekennzeichnet, dass** der untere Rand (29) Sacklöcher (45) aufweist, die sich entlang des Umfangs befinden und entlang des Umfangs verteilt sind, wobei diesbezüglich die Auflage des unteren Rands (29) auf der Einlage mit Filterwirkung (35) stellenweise unterbrochen ist, und dass die Löcher (45) mit dem ringförmigen Spielraum (40) in Verbindung stehen, aber in Richtung einer Entfernung von der Kante (31) **dadurch** geschlossen sind, dass der untere Rand (29) des Deckels (3) auf der Einlage mit Filterwirkung (35) aufliegt.

9. Vorrichtung nach einem beliebigen der Ansprüche 1 bis 8, **dadurch gekennzeichnet, dass** der Deckel (3) die allgemeine Form eines Topfs aufweist, der im Inneren einen Hohlraum (52) abgrenzt, welcher sich, bezogen auf den unteren Rand (29), nach oben erstreckt.

10. Vorrichtung nach einem beliebigen der Ansprüche 1 bis 10, **dadurch gekennzeichnet, dass** der Deckel (3) eine drehsymmetrische allgemeine Form aufweist.

11. Vorrichtung nach einem beliebigen der Ansprüche 1 bis 11, **dadurch gekennzeichnet, dass** der Deckel (3) zum Einmalgebrauch bestimmt ist und aus einem Werkstoff gefertigt ist, der seine Entsorgung nach der Verwendung erleichtert, insbesondere aus Sand, der mit einem Bindemittel agglomeriert ist.
